# FASCICULE DE BREVET EUROPEEN

(11) **EP 2 814 718 B1**
(45) Date de publication et mention de la délivrance du brevet: **29.03.2017**
(21) Numéro de dépôt: 13703564.8
(22) Date de dépôt: 05.02.2013
(51) Int. Cl.: B62D 25/08, B62D 25/16

(54) **SUPPORT MULTIFONCTIONS POUR LE MONTAGE D'ÉLÉMENTS FONCTIONNELS D'UN VÉHICULE AUTOMOBILE**
MULTIFUNKTIONSTRÄGER ZUR MONTAGE VON FUNKTIONSELEMENTEN EINES KRAFTFAHRZEUGS
MULTIFUNCTIONAL SUPPORT FOR MOUNTING FUNCTIONAL ELEMENTS OF A MOTOR VEHICLE

(30) Priorité: 13.02.2012 FR 1251320
(43) Date de publication de la demande: 24.12.2014
(73) Titulaire: Renault S.A.S., 92100 Boulogne-Billancourt (FR)
(72) Inventeur: BARREIRO, Emmanuel, F-78770 Villiers Le Mahieu (FR); LE ROY, Julien, F-78000 Versailles (FR)
(86) Numéro de dépôt international: PCT/EP2013/052218
(87) Numéro de publication internationale: WO 2013/120728

(56) Documents cités:
- EP-A1- 1 806 274
- FR-A1- 2 899 554
- US-A1- 2004 108 753

## Description

### Domaine technique de l'invention

L'invention concerne un support multifonctions destiné au montage d'éléments fonctionnels d'un véhicule automobile sur une caisse du véhicule.

L'invention a pour objet également un véhicule automobile, comprenant au moins un tel support multifonctions.

### État de la technique

Dans la construction d'un véhicule automobile, il est nécessaire de monter et de positionner de très nombreux éléments fonctionnels (par exemple des éléments de carrosserie, des éléments d'éclairage, des éléments d'étanchéité, etc.) par rapport à la caisse de structure du véhicule automobile.

Les éléments fonctionnels sont classiquement positionnés indépendamment l'un de l'autre sur le référentiel géométrique constitué par la caisse. La fixation peut se faire en plusieurs opérations et nécessiter des réglages délicats successifs, à la fois des jeux éventuels et des affleurements éventuels des éléments les uns par rapport aux autres.

Ce mode de montage et de positionnement est fastidieux en raison de la complexité géométrique à respecter dans le positionnement précis des éléments fonctionnels, du grand nombre de pièces qui composent l'ensemble et des réglages itératifs que nécessite leur mise en place correcte. De plus, ce principe de montage et de positionnement fait intervenir un outillage lourd et coûteux.

Ces problématiques générales doivent être résolues en particulier dans le cadre du positionnement et du montage sur la caisse de véhicule automobile, d'un capot destiné à fermer le compartiment moteur et/ou d'une boîte à eau et/ou d'un projecteur lumineux.

Par ailleurs, un montage du capot par articulation peut s'avérer problématique pour des raisons pratiques ou de coût. Un tel montage est par exemple obtenu en prévoyant une articulation à pivotement entre le capot et une pièce appelée « support de capot » destinée à supporter le capot lorsqu'il est en position fermée. Un tel support de capot est lui-même fixé à un élément de structure de la caisse. Ce type de support de capot participe au montage et au positionnement, mais le maintien en position fermée (contre un mouvement d'ouverture vers le dessus) doit être obtenu à l'aide d'un élément de blocage complémentaire, déporté par rapport au support de capot.

Dans des solutions actuelles, la boîte à eau est réalisée d'une seule pièce sur toute sa longueur considérée dans une direction longitudinale de la boîte à eau, cette direction étant souvent orientée dans une direction transversale au véhicule.

De plus en plus fréquemment, l'encombrement de la partie supérieure du compartiment moteur est important, comme décrit notamment dans les documents US 2004/0108753, qui divulgue le préambule de la revendication 1, et EP 1 806 274. La mise en place d'une boîte à eau monobloc devient très délicate, impliquant un passage difficile des outillages, notamment des visseuses, nécessite de nombreuses manipulations précises (louvoiement) de la boîte à eau en raison de l'accès réduit. Suivant les architectures, la mise en place devient parfois impossible en pratique. Ce problème est particulièrement vrai lorsque deux éléments encombrants tels que des supports de capot, destinés à supporter le capot, sont disposés de part et d'autre de la boîte à eau dans la direction longitudinale de la boîte à eau, dans une direction transversale à la caisse du véhicule. En effet, dans le cas où ces supports de capot débordent vers l'intérieur du compartiment moteur, ils forment un obstacle contraignant pour la mise en place de la boîte à eau. On dit que ces supports de capot débordent vers l'intérieur au sens où ils pénètrent en saillie vers l'espace intérieur du compartiment moteur, suivant la direction transversale au véhicule.

D'autre part, il est fréquent que la boîte à eau doive être mise en place par-dessus un mécanisme d'essuie-vitre préalablement fixé, par exemple sur une traverse supérieure de tablier. La boîte à eau est alors traversée par les axes d'essuie-vitre au niveau d'ouvertures ménagées à cet effet dans l'épaisseur de la boîte à eau. Les axes d'essuie-vitre sont inscrits dans des plans verticaux, sensiblement perpendiculaires à la courbe formée par la traverse supérieure de tablier (courbe formée par le galbe du bord inférieur du pare-brise et de la traverse intérieure de baie). Ainsi la mise en place de la boite à eau s'effectue avec la contrainte de faire traverser la boite à eau par les axes d'essuie-vitre, via des orifices prévus à cet effet. Le déplacement de la boite à eau est effectué suivant une trajectoire sensiblement inscrite dans un plan vertical et longitudinal par rapport à la direction longitudinale du véhicule (plan (X, Z) tel que défini ci-après). Cette disposition interdit tout déplacement de la boîte à eau suivant la direction transversale au véhicule (en louvoyant suivant la direction Y définie ci-après), ce qui limite la facilité de mise en place de la boîte à eau, en particulier lorsqu'il convient d'échapper à de tels supports de capot pour parvenir à mettre en place la boîte à eau sous ces derniers.

Il existe donc un réel besoin de disposer d'une solution permettant la mise en place aisée de la boîte à eau indépendamment de l'architecture et de l'encombrement en partie supérieure du compartiment moteur.

Enfin, classiquement, le montage d'un projecteur lumineux se fait sur une traverse avant qui est elle-même solidaire du reste de la caisse. Une telle traverse peut également porter la calandre. Un tel montage reste perfectible.

### Objet de l'invention

La présente invention vise principalement à remédier à ces inconvénients de l'art antérieur en proposant un support multifonctions qui permet de simplifier les opérations de montage d'éléments fonctionnels donnés sur la caisse d'un véhicule automobile.

Un autre objet est de proposer une alternative au montage d'un projecteur d'éclairage par rapport à des solutions existantes.

Un autre objet est de fournir une solution permettant un montage et un positionnement du capot sur la caisse proposant une alternative par rapport à un montage par articulation.

Un autre objet est de fournir une solution permettant d'améliorer la simplicité de maintien du capot en position fermée, contre un passage vers une position d'ouverture.

Un autre objet est de fournir une solution permettant la mise en place certaine et aisée de la boîte à eau indépendamment de l'encombrement et de l'architecture au niveau de la partie supérieure du compartiment moteur du véhicule automobile.

Selon l'invention, le support multifonctions est destiné au montage d'éléments fonctionnels d'un véhicule automobile sur une caisse du véhicule, le support multifonctions comprenant :
- des éléments de fixation destinés à fixer le support multifonctions sur au moins un élément associé de la caisse, tel qu'un support d'aile et/ou une doublure d'un pied avant,
- des éléments de montage destinés à maintenir sur le support multifonctions au moins un projecteur lumineux destiné à assurer une fonction d'éclairage et/ou un capot destiné à fermer un compartiment moteur du véhicule dans une position fermée du capot.

Le support comprend des éléments de montage destinés à maintenir sur le support multifonctions toute ou partie d'une boîte à eau destinée à récolter de l'eau et/ou à la séparer de l'air devant être acheminé à un circuit de ventilation du véhicule.

Le support multifonctions comprend des éléments de montage du capot sur le support multifonctions et les éléments de montage du capot sur le support multifonctions comprend des éléments de positionnement configurés de sorte à interdire tout déplacement ayant une composante verticale, entre le support multifonctions et le capot lorsqu'il est en position fermée.

Les éléments de positionnement peuvent comprendre un élément de butée inférieure destinée à immobiliser le capot vers le bas lorsqu'il est en position fermée.

Les éléments de positionnement sont configurés de sorte à être activés par un coulissement du capot par rapport au support multifonctions dans un premier sens et à être désactivés par un coulissement du capot par rapport au support multifonctions dans un deuxième sens opposé au premier sens, notamment dans une direction sensiblement horizontale.

Les éléments de positionnement peuvent comprendre au moins un premier organe destiné à s'engager par coulissement dans un deuxième organe solidaire du capot, lors du coulissement du capot par rapport au support multifonctions dans le premier sens.

L'un des premier et deuxième organes peut comprendre au moins une patte d'accrochage venant s'insérer, lors du coulissement du capot dans le premier sens, dans un logement de retenue équipant l'autre des premier et deuxième organes.

Le support multifonctions peut comprendre des éléments de montage destinés au maintien d'une partie de la boîte à eau et ces éléments de montage destinés au maintien d'une partie de la boîte à eau peuvent comprendre un élément d'extrémité de fermeture de la boîte à eau, ledit élément d'extrémité étant solidaire du support multifonctions et configuré de sorte à pouvoir soutenir une extrémité longitudinale d'un élément central de fermeture de la boîte à eau.

L'élément central est destiné à récolter de l'eau et à l'acheminer jusqu'à l'élément d'extrémité. L'élément d'extrémité peut comprendre un élément de guidage d'eau configuré pour recueillir l'eau acheminée par l'élément central et la canaliser hors du support multifonctions.

L'élément d'extrémité peut comprendre une face supérieure sur laquelle l'extrémité longitudinale correspondante de l'élément central est destinée à venir en appui par chevauchement depuis le dessus.

L'élément d'extrémité peut comprendre un élément d'étanchéité à l'eau destiné à être interposé entre l'élément d'extrémité et l'élément central.

L'élément d'extrémité peut comprendre un élément d'appui destiné à venir en appui de manière étanche sur une traverse supérieure de tablier de la caisse.

Le support multifonctions peut être constitué par une pièce monobloc.

Selon l'invention, un véhicule automobile comprend au moins un support multifonctions défini précédemment, un élément associé de la caisse du véhicule, tel qu'un support d'aile et/ou une doublure d'un pied avant, sur lequel ledit au moins un support multifonctions est fixé, et au moins un élément fonctionnel maintenu sur le support multifonctions, choisi parmi les suivants :
- toute ou partie d'une boite à eau destinée à récolter de l'eau et/ou à la séparer de l'air devant être acheminé à un circuit de ventilation du véhicule,
- au moins un projecteur lumineux destiné à assurer une fonction d'éclairage,
- un capot destiné à fermer un compartiment moteur du véhicule dans une position fermée du capot.

Le véhicule peut comprendre deux supports multifonctions disposés de part et d'autre du capot et/ou de l'élément central de fermeture de la boîte à eau, suivant une direction transversale au véhicule.

Le véhicule peut comprendre un mécanisme de verrouillage variant entre une configuration de verrouillage interdisant la désactivation des éléments de positionnement et une configuration de déverrouillage autorisant l'activation des éléments de positionnement.

Le mécanisme de verrouillage peut être configuré de sorte que le passage du mécanisme de verrouillage de la configuration de déverrouillage à la configuration de verrouillage provoque un coulissement du capot par rapport au support multifonctions dans le premier sens.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont des vues en perspective, respectivement avant et arrière, d'un premier mode de réalisation de support multifonctions selon l'invention,
- les figures 3 et 4 représentent en perspective partiellement un exemple d'agencement pour un véhicule automobile selon l'invention utilisant le support multifonctions des figures 1 et 2,
- la figure 5 est une vue en perspective d'un deuxième mode de réalisation de support multifonctions selon l'invention,
- la figure 6 représente partiellement un exemple d'agencement pour un véhicule automobile selon l'invention utilisant le support multifonctions de la figure 5,
- les figures 7 et 8 représentent un exemple de mécanisme de verrouillage en configuration de déverrouillage,
- les figures 9 et 10 représentent le mécanisme de verrouillage en configuration de verrouillage.

### Description de modes préférentiels de l'invention

La description est faite en référence à un repère orthonormé (X, Y, Z) associé classiquement à un véhicule automobile, dans lequel X est la direction longitudinale avant - arrière du véhicule dirigée vers l'arrière, Y est la direction transversale droite-gauche qui est horizontale et perpendiculaire à X, dirigée vers la droite, et Z est la direction verticale dirigée vers le dessus.

Des références numérales identiques sont adoptées pour des éléments assurant une même fonction entre les deux modes de réalisation de support multifonctions selon l'invention.

Un support multifonctions 10 est destiné au montage d'éléments fonctionnels particuliers (détaillés plus loin) d'un véhicule automobile sur une caisse de ce véhicule.

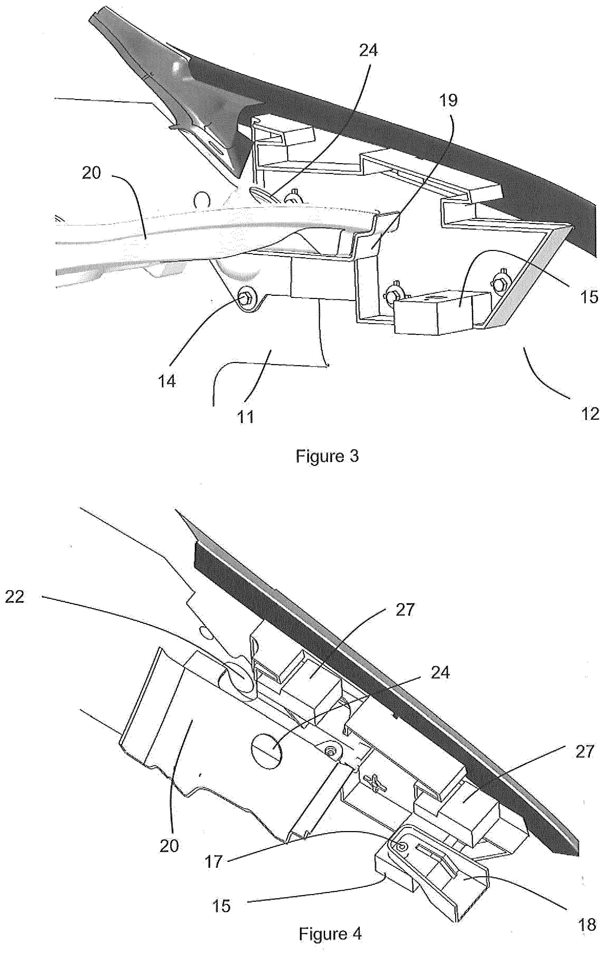

Le support multifonctions 10 comprend des éléments de fixation destinés à fixer le support multifonctions 10 sur au moins un élément associé de la caisse, notamment en assurant une fixation démontable du support multifonctions 10. Autrement dit, le support multifonctions 10 comprend une partie d'un moyen de fixation destiné à assurer la fixation démontable du support multifonctions 10 sur l'élément de caisse associé, cette partie de moyen de fixation coopérant pour cela avec une partie complémentaire du moyen de fixation portée par l'élément de caisse associé. En fonction de l'architecture en partie supérieure du compartiment moteur, les éléments de caisse auxquels le support multifonctions 10 est fixé peuvent être quelconques. A titre d'exemple, il peut s'agir d'une doublure d'un pied avant 11 et/ou un support d'aile 12 (figure 3). Ces moyens de fixation du support multifonctions 10 aux éléments de caisse 11, 12 peuvent être de toute nature, tel que des moyens de vissage, d'encliquetage ou équivalents. Les éléments de fixation qui équipent le support multifonctions 10 peuvent dès lors être de toute nature, par exemple comprendre au moins une ouverture 13 (ici au nombre de quatre) destinée à être traversée ensuite par une vis 14 solidaire de l'élément de caisse associé ou venant en prise dans ce dernier. Il peut alternativement s'agir d'un système boulon/écrou.

Selon une caractéristique importante, le support multifonctions 10 comprend également des éléments de montage destinés à maintenir sur le support multifonctions 10 un ou plusieurs élément(s) fonctionnel(s) définis ci-dessous, choisi(s) parmi la liste suivante :
- toute ou partie d'une boîte à eau (figures 3 et 4) destinée à récolter de l'eau et/ou à la séparer de l'air devant être acheminé à un circuit de ventilation du véhicule,
- au moins un projecteur lumineux destiné à assurer une fonction d'éclairage,
- un capot 29 destiné à fermer un compartiment moteur du véhicule dans une position fermée du capot.

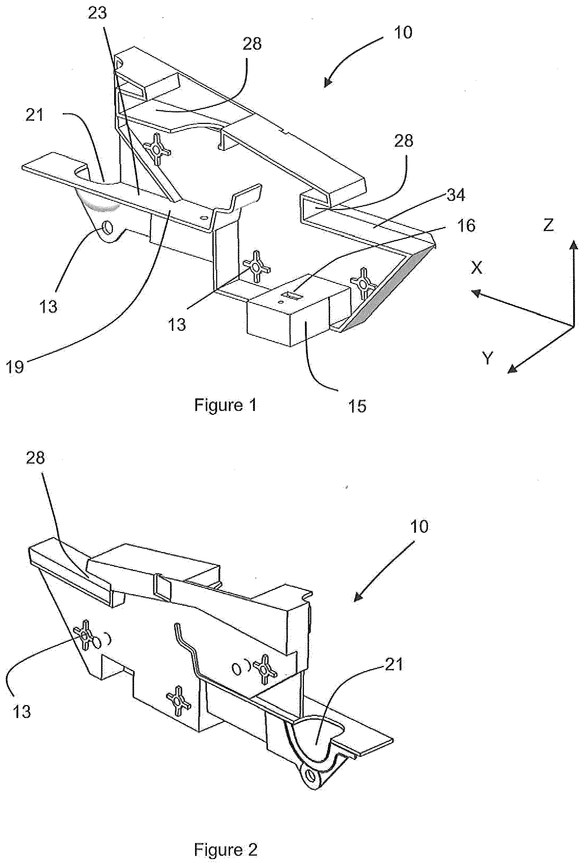

Dans le cas particulier où le support multifonctions 10 comprend des éléments de montage d'au moins un projecteur lumineux, ceux-ci peuvent être de toute nature, notamment suivant la construction de ce projecteur lumineux. Ils peuvent se présenter par exemple sous la forme d'une patte de fixation 15 agencée de sorte à déborder suivant Y par rapport au reste du support multifonctions 10, suivant le sens destiné à être tourné en direction de l'intérieur du compartiment moteur, opposé à l'aile latérale de carrosserie. La patte de fixation 15 peut comprendre une ouverture 16 (figure 1) pour le passage d'un organe de fixation 17 (figure 4) lui-même porté par un bras 18 solidaire du reste du projecteur lumineux (non représenté dans son intégralité). Les figures 3 et 4 qui représentent en perspective, partiellement, un exemple d'agencement pour un véhicule automobile selon l'invention utilisant le support multifonctions 10 des figures 1 et 2, illustrent ces éléments.

Dans le cas particulier où le support multifonctions 10 comprend des éléments de montage de tout ou partie d'une boîte à eau, ces éléments peuvent être de toute nature, notamment suivant la conception de cette boîte à eau. Les figures 1 à 6 représentent un cas particulier dans lequel le support multifonctions 10 comprend des éléments de montage destinés au maintien d'une partie uniquement de la boîte à eau, celle-ci étant avantageusement formée en trois parties pour améliorer sa facilité de mise en place. Ces éléments de montage solidaires du support multifonctions 10 comprennent avantageusement un élément d'extrémité 19 de fermeture de la boîte à eau, cet élément d'extrémité 19 étant donc solidaire du support multifonctions 10. L'élément d'extrémité 19 est configuré de sorte à pouvoir soutenir une extrémité longitudinale d'un élément central 20 de fermeture de la boîte à eau. Pour former une boîte à eau, il est donc nécessaire de prévoir deux supports 10 de part et d'autre de l'élément central 20 commun aux deux éléments d'extrémité 19.

L'élément central 20 est notamment destiné à récolter de l'eau provenant par exemple de l'écoulement sur le pare-brise du véhicule. Il peut aussi, éventuellement, servir à acheminer l'eau récoltée jusqu'à l'élément d'extrémité 19. C'est notamment le cas lorsque l'agencement, qui comprend les éléments de caisse sur lesquels le support multifonctions 10 est fixé, comprend en complément un conduit d'évacuation 22 de l'eau déversée hors de la boîte à eau. Ce conduit d'évacuation 22 destiné à conduire l'eau au compartiment moteur situé sous la boîte à eau peut être équipé d'un clapet d'obturation agencé au niveau de l'élément de caisse auquel est fixé le support multifonctions 10. L'eau s'écoule ensuite par exemple dans l'espace entre la doublure de pied avant 11 et l'aile latérale du véhicule. Le clapet est destiné à éviter les nuisances sonores en provenance de la route ou de l'avant du véhicule. Il est dès lors avantageux de prévoir que l'élément d'extrémité 19 comprenne un élément de guidage d'eau 21, par exemple sous forme d'une forme concave, configuré pour recueillir l'eau acheminée par l'élément central 20 et la canaliser hors du support multifonctions 10, jusqu'au conduit d'évacuation 22.

C'est pourquoi en référence aux figures 2 et 4 notamment, l'élément d'extrémité 19 de la boîte à eau, solidaire du support multifonctions 10, comprend, du côté dirigé vers l'élément de caisse sur lequel il est destiné à être fixé, une forme concave apte à canaliser dans la direction longitudinale de la boîte à eau, le déversement hors de la boîte à eau de l'eau recueillie par l'élément central 20. Il convient de préciser que classiquement mais non exclusivement, la direction longitudinale de la boîte à eau, correspondant à la direction de plus grande dimension de l'élément central 20 et le long de laquelle l'eau s'écoule globalement, est orientée parallèlement à la direction transversale Y au véhicule.

A titre d'exemple non limitatif, l'élément d'extrémité 19 comprend une face supérieure 23 en forme de rebord, sur laquelle l'extrémité longitudinale correspondante de l'élément central 20 est destinée à venir en appui par chevauchement depuis le dessus. Grâce à un tel aménagement, le montage de la boîte à eau sur la caisse peut se pratiquer avantageusement en deux temps :
- d'abord en fixant chacun des supports multifonctions 10 sur un élément 11, 12 associé de la caisse,
- puis en fixant l'élément central 20 de la boîte à eau sur les éléments d'extrémité 19 solidaires des supports 10 préalablement fixés à la caisse.

Ainsi, pour fixer l'élément central 20 sur chacun des éléments d'extrémité 19, son extrémité longitudinale correspondante est rapportée sur l'élément d'extrémité 19 puis fixée dans la zone de chevauchement par exemple au moyen d'au moins une vis de fixation (non représentée).

Il en résulte que l'élément central 20 surplombe les éléments d'extrémité 19, favorisant un déversement naturel de l'eau vers les côtés. La zone ou distance de chevauchement est au minimum de 7 mm par exemple suivant la direction transversale Y au véhicule. La zone de chevauchement est par exemple au maximum de 20 mm, notamment 10 mm, suivant la direction transversale Y au véhicule.

Pour assurer un meilleur maintien de l'élément central 20 suite à sa fixation sur les éléments d'extrémité 19, l'élément central 20 peut comprendre des éléments assurant sa fixation à au moins un élément associé de la caisse tel qu'une traverse supérieure de tablier de la caisse.

Par une organisation adaptée des éléments central 20 et d'extrémité 19, la fixation de l'élément central 20 peut avantageusement comprendre une étape de mise en place de l'élément central 20 sur les éléments d'extrémité 19 par un déplacement de l'élément central 20 dans un plan (X, Z) perpendiculaire à la direction transversale Y de la caisse du véhicule.

Chaque élément d'extrémité 19 s'avance donc vers l'intérieur du véhicule, suivant la direction transversale Y à la caisse du véhicule, au-delà du bord intérieur du reste du support multifonctions 10, afin de permettre le passage de l'élément central 20 entre les supports 10 lors du montage de l'élément central 20 suivant la trajectoire sensiblement inscrite dans un plan vertical et longitudinal (X, Z) à la caisse du véhicule. On entend par « bord intérieur » le bord du support 10 (en dehors de l'élément d'extrémité 19) situé vers l'intérieur du véhicule, c'est-à-dire le plus proche du plan médian longitudinal-vertical du véhicule.

Il convient dès lors de limiter si possible l'encombrement résultant de la présence des éléments d'extrémité 19. Le rapport entre la dimension longitudinale de l'élément central 20 (considérée suivant la direction longitudinale de la boîte à eau, ici suivant la direction Y) et la dimension longitudinale de chacun des éléments d'extrémité 19 (considérée dans la même direction) est supérieur à 10. Autrement dit, le rapport des longueurs entre l'élément central 20 et chaque élément d'extrémité 19 est supérieur à 10, ces longueurs étant considérées suivant la direction transversale Y à la caisse du véhicule. A titre d'exemple, chaque élément d'extrémité 19 a une dimension suivant la direction transversale Y qui est inférieure à 150 mm, notamment inférieure à 100 mm.

Ceci facilite la mise en place de la boîte à eau par-dessus un mécanisme d'essuie-vitre préalablement fixé, par exemple sur la traverse supérieure de tablier. La boîte à eau est alors traversée par les axes d'essuie-vitre au niveau d'ouvertures 24 (figure 4) ménagées à cet effet dans l'épaisseur de l'élément central 20. Cette disposition permet donc de s'affranchir de l'impossibilité de déplacement de la boîte eau suivant la direction transversale Y au véhicule.

D'autre part, l'élément d'extrémité 19 comprend un élément d'étanchéité 25 à l'eau destiné à être interposé entre l'élément d'extrémité 19 et l'élément central 20 dans la zone de chevauchement.

Par ailleurs, le support multifonctions 10 comprend, au niveau de l'élément d'extrémité 19, un élément d'appui 26 destiné à venir en appui de manière étanche sur la traverse supérieure de tablier de la caisse.

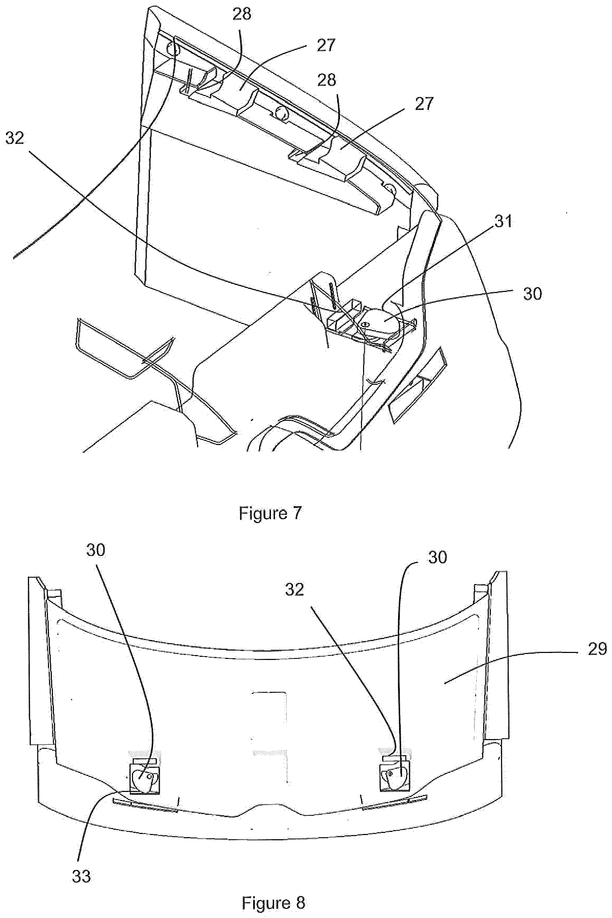

Dans le cas particulier où le support multifonctions 10 comprend des éléments de montage du capot 29 (figure 8 à 10) sur le support multifonctions 10, ces éléments comprennent des éléments de positionnement (détaillés plus loin) configurés de sorte à interdire tout déplacement ayant une composante verticale entre le support multifonctions 10 et le capot 29 lorsqu'il est en position fermée. Autrement dit, par eux-mêmes et sans nécessiter d'autre moyen de maintien pour immobiliser le capot 29 vers le haut, les éléments de positionnement solidaires du (des) support(s) 10 inhibent toute possibilité de translation du capot suivant Z et/ou toute possibilité de rotation du capot suivant Y et/ou X.

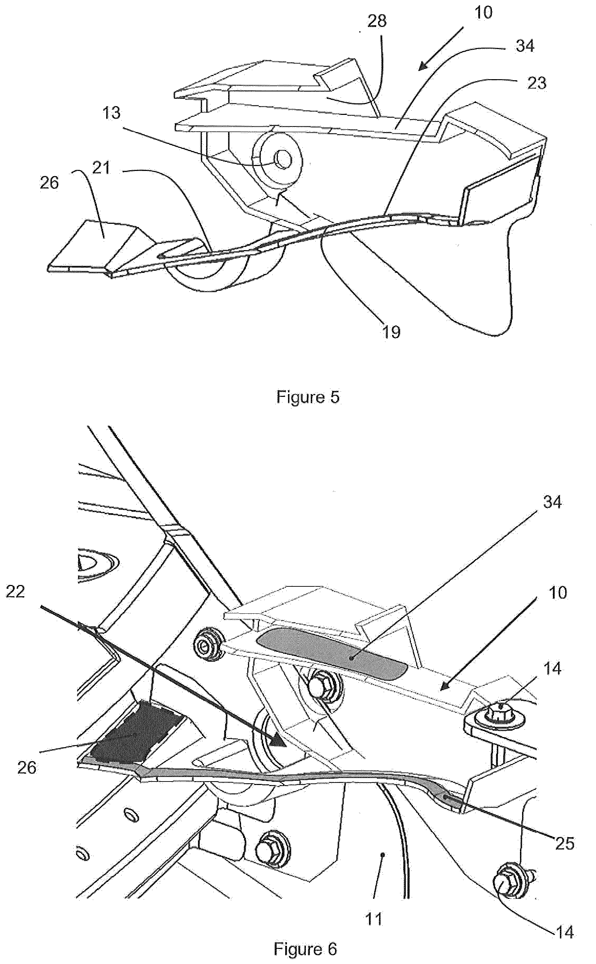

Comme illustré sur les figures 1, 3 et 4 notamment pour le premier mode de réalisation et sur les figures 5 et 6 pour le deuxième mode de réalisation, les éléments de positionnement solidaires du support multifonctions 10 comprennent au moins un premier organe destiné à s'engager par coulissement dans un deuxième organe solidaire du capot 29, lors d'un coulissement du capot 29 par rapport au support multifonctions 10 dans un premier sens (ici en direction de l'arrière du véhicule suivant X), notamment dans une direction sensiblement horizontale (ici selon X). Le désengagement du premier organe par rapport au deuxième organe solidaire du capot 29 se fait par coulissement du capot 29 par rapport au support multifonctions 10 dans un deuxième sens (ici en direction de l'avant du véhicule suivant X) opposé au premier. Les premier et deuxième organes respectivement solidaires du support 10 et du capot 29 peuvent être de toute nature. Dans le premier mode illustré, chacun des deux deuxièmes organes qui équipent le capot 29 comprend au moins une patte d'accrochage 27 venant s'insérer, lors du coulissement du capot 29 dans le premier sens (vers l'arrière du véhicule suivant X), dans un logement de retenue 28 correspondant qui équipe le premier organe du support multifonctions 10. Autrement dit, le support multifonctions 10 comprend au moins un logement de retenue 28, par exemple au nombre de deux dans le premier mode de réalisation, configuré pour permettre le montage à coulissement, suivant le premier sens, de la patte d'accrochage 27 correspondante solidaire du capot 29.

Il est possible de prévoir un montage inversé, à savoir que chacun des deux premiers organes qui équipent le support multifonctions 10 comprenne au moins une patte d'accrochage (non représentée) venant s'insérer, lors du coulissement du capot 29 dans le premier sens, dans un logement de retenue (non représenté) correspondant qui équiperait le deuxième organe du capot 29.

Dans le deuxième mode de réalisation des figures 5 et 6, le support multifonctions 10 ne comporte qu'un seul logement de retenue 28 et le deuxième organe du capot ne comprend qu'une patte 27.

Lorsque chacune des pattes d'accrochage (qu'elle soit solidaire du capot 29 ou du support multifonctions 10) est engagée à coulissement dans le logement de retenue 28 correspondant (appartenant donc respectivement au support multifonctions 10 ou au capot 29, suivant la variante), le capot 29 est positionné et maintenu de sorte que tout déplacement du capot suivant Z est interdit.

Le fonctionnement ressort de ce qui précède, à savoir que les éléments de positionnement sont configurés de sorte à être activés par un coulissement du capot 29 par rapport au support multifonctions 10 dans un premier sens (ici en direction de l'arrière du véhicule suivant X) et à être désactivés par un coulissement du capot 29 par rapport au support multifonctions 10 dans un deuxième sens (ici en direction de l'avant du véhicule suivant X) opposé au premier sens, notamment dans une direction sensiblement horizontale (par exemple suivant X).

Par ailleurs, les éléments de positionnement comprennent au moins un élément de butée inférieure destinée à immobiliser le capot 29 vers le bas suivant Z lorsqu'il est en position fermée. Chacun de ces éléments de butée est constitué par exemple par le fond 34 (figures 1 et 5) d'un logement de retenue 28 donné.

Dans un mode de réalisation avantageux, le support multifonctions 10 est constitué par une pièce monobloc, d'un seul tenant, en matière plastique ou métallique notamment. Ceci présente l'avantage d'une facilité d'obtention, de manipulation, de stockage, etc.

Au moins un tel support multifonctions 10 peut être utilisé dans l'organisation d'un agencement pour un véhicule automobile selon l'invention, comprenant également un élément associé de la caisse du véhicule, tel qu'un support d'aile 12 et/ou une doublure d'un pied avant 11, sur lequel ledit au moins un support multifonctions 10 est fixé. L'agencement comprend en outre au moins un élément fonctionnel maintenu sur le support multifonctions 10, choisi parmi les suivants :
- toute ou partie de la boîte à eau, par exemple celle précédemment décrite,
- au moins un projecteur lumineux,
- le capot 29, quelle que soit sa nature.

Notamment, deux support multifonctions 10 peuvent être disposés de part et d'autre du capot 29 et/ou de l'élément central 20 de la boîte à eau, suivant la direction transversale Y au véhicule. Ceci favorise un maintien et un positionnement du capot 29 sur chacun de ses bords latéraux, lorsqu'il est en position fermée.

L'agencement peut comprendre un mécanisme de verrouillage variant entre une configuration de verrouillage interdisant la désactivation des éléments de positionnement et une configuration de déverrouillage autorisant l'activation des éléments de positionnement. Le mécanisme de verrouillage est disposé par exemple au niveau d'un bord avant du capot 29, à proximité de la calandre avant du véhicule.

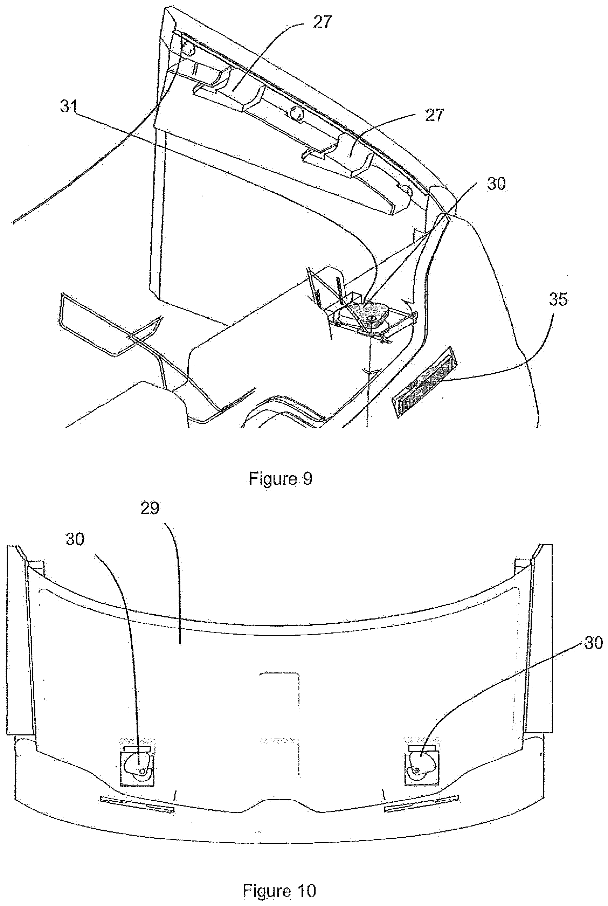

Comme représenté plus particulièrement sur les figures 7 à 10, le mécanisme de verrouillage peut être de toute nature, suivant notamment la conception des éléments de positionnement solidaires du support multifonctions. Le mécanisme de verrouillage peut comprendre au moins un verrou 30 (ici deux) variant entre une position de blocage correspondant à la configuration de verrouillage (figures 9 et 10) et une position de déblocage correspondant à la configuration de déverrouillage (figures 7 et 8). Le verrou 30 est muni d'une surface de came 31 (figure 7) configurée pour coopérer avec un élément d'appui 32 solidaire du capot 29 de sorte à entraîner le coulissement du capot 29 dans le premier sens lors du passage de la position de déblocage du verrou 30 à la position de blocage. Autrement dit, le mécanisme de verrouillage est configuré de sorte que, par appui de la surface de came 31 sur l'élément d'appui 32, le passage du mécanisme de verrouillage de la configuration de déverrouillage à la configuration de verrouillage provoque un coulissement du capot 29 par rapport au support multifonctions 10 dans le premier sens.

La variation du verrou 30 de la position de déblocage à la position de blocage, ou inversement, se fait par rotation du verrou 30. Le verrou 30 est muni aussi d'un élément d'actionnement 35 (figure 9) tel qu'une tige ou équivalent, configuré de sorte à pouvoir commander la variation du verrou 30 de la position de déblocage à la position de blocage, ou inversement.

Chaque verrou 30 du mécanisme de verrouillage vient se loger en position fermée du capot dans un trou 33 ménagé dans le capot 29, notamment dans la doublure de capot, ce trou 33 étant configuré de sorte à autoriser la variation du verrou 30 de la position de déblocage à la position de blocage, ou inversement.

L'invention propose donc un support multifonctions qui permet de faciliter le montage d'éléments fonctionnels particuliers, chacun à son emplacement exact et en respectant les mises à niveau et les jeux de chaque élément par rapport à l'autre. Ce montage se fait rapidement, sans tâtonnement et sans utilisation d'outillages onéreux.

## Revendications

1. Support multifonctions (10) destiné au montage d'éléments fonctionnels d'un véhicule automobile sur une caisse du véhicule, le support multifonctions (10) comprenant :
- des éléments de fixation (14) destinés à fixer le support multifonctions (10) sur au moins un élément associé de la caisse, tel qu'un support d'aile (12) et/ou une doublure d'un pied avant (11),
- des éléments de montage destinés à maintenir sur le support multifonctions (10) au moins un projecteur lumineux (18) destiné à assurer une fonction d'éclairage et/ou un capot (29) destiné à fermer un compartiment moteur du véhicule dans une position fermée du capot (29),
le support (10) comprenant des éléments de montage destinés à maintenir sur le support multifonctions (10) toute ou partie d'une boîte à eau (19, 20) destinée à récolter de l'eau et/ou à la séparer de l'air devant être acheminé à un circuit de ventilation du véhicule, le support (10) comprenant des éléments de montage du capot (29) sur le support multifonctions (10), les éléments de montage du capot (29) sur le support multifonctions (10) comprenant des éléments de positionnement configurés de sorte à interdire tout déplacement ayant une composante verticale, entre le support multifonctions (10) et le capot (29) lorsqu'il est en position fermée,
**caractérisé en ce que** les éléments de positionnement sont configurés de sorte à être activés par un coulissement du capot (29) par rapport au support multifonctions (10) dans un premier sens et à être désactivés par un coulissement du capot (29) par rapport au support multifonctions (10) dans un deuxième sens opposé au premier sens, notamment dans une direction sensiblement horizontale (X).

2. Support multifonctions (10) selon la revendication 1, **caractérisé en ce que** les éléments de positionnement comprennent un élément de butée inférieure (34) destinée à immobiliser le capot (29) vers le bas lorsqu'il est en position fermée.

3. Support multifonctions (10) selon la revendication 1 ou 2, **caractérisé en ce que** les éléments de positionnement comprennent au moins un premier organe destiné à s'engager par coulissement dans un deuxième organe solidaire du capot (29), lors du coulissement du capot (29) par rapport au support multifonctions (10) dans le premier sens.

4. Support multifonctions (10) selon l'une des revendications 1 à 3, **caractérisé en ce que** l'un des premier et deuxième organes comprend au moins une patte d'accrochage (27) venant s'insérer, lors du coulissement du capot (29) dans le premier sens, dans un logement de retenue (28) équipant l'autre des premier et deuxième organes.

5. Support multifonctions (10) selon l'une des revendications 1 à 4, **caractérisé en ce qu'**il comprend des éléments de montage destinés au maintien d'une partie de la boîte à eau et **en ce que** ces éléments de montage destinés au maintien d'une partie de la boîte à eau comprennent un élément d'extrémité (19) de fermeture de la boîte à eau, ledit élément d'extrémité (19) étant solidaire du support multifonctions (10) et configuré de sorte à pouvoir soutenir une extrémité longitudinale d'un élément central (20) de fermeture de la boîte à eau.

6. Support multifonctions (10) selon la revendication 5, **caractérisé en ce que** l'élément central (20) étant destiné à récolter de l'eau et à l'acheminer jusqu'à l'élément d'extrémité (19), l'élément d'extrémité (19) comprend un élément de guidage (21) d'eau configuré pour recueillir l'eau acheminée par l'élément central (20) et la canaliser hors du support multifonctions (10).

7. Support multifonctions (10) selon la revendication 5 ou 6, **caractérisé en ce que** l'élément d'extrémité (19) comprend une face supérieure (23) sur laquelle l'extrémité longitudinale correspondante de l'élément central (20) est destinée à venir en appui par chevauchement depuis le dessus.

8. Support multifonctions (10) selon l'une des revendications 5 à 7, **caractérisé en ce que** l'élément d'extrémité (19) comprend un élément d'étanchéité (25) à l'eau destiné à être interposé entre l'élément d'extrémité (19) et l'élément central (20).

9. Support multifonctions (10) selon l'une des revendications 5 à 8, **caractérisé en ce que** l'élément d'extrémité (19) comprend un élément d'appui (26) destiné à venir en appui de manière étanche sur une traverse supérieure de tablier de la caisse.

10. Support multifonctions (10) selon l'une quelconque des revendications 1 à 9, **caractérisé en ce qu'**il est constitué par une pièce monobloc.

11. Véhicule automobile, comprenant au moins un support multifonctions (10) selon l'une quelconque des revendications 1 à 10, un élément associé de la caisse du véhicule, tel qu'un support d'aile (12) et/ou une doublure d'un pied avant (11), sur lequel ledit au moins un support multifonctions (10) est fixé, et au moins un élément fonctionnel maintenu sur le support multifonctions, choisi parmi les suivants :
- toute ou partie d'une boite à eau (19, 20) destinée à récolter de l'eau et/ou à la séparer de l'air devant être acheminé à un circuit de ventilation du véhicule,
- au moins un projecteur lumineux (18) destiné à assurer une fonction d'éclairage,
- un capot (29) destiné à fermer un compartiment moteur du véhicule dans une position fermée du capot.

12. Véhicule selon la revendication 11, **caractérisé en ce qu'**il comprend deux supports multifonctions (10) disposés de part et d'autre du capot (29) et/ou de l'élément central (20) de fermeture de la boîte à eau, suivant une direction transversale (Y) au véhicule.

13. Véhicule selon la revendication 11 ou 12, **caractérisé en ce qu'**il comprend un mécanisme de verrouillage (30) variant entre une configuration de verrouillage interdisant la désactivation des éléments de positionnement et une configuration de déverrouillage autorisant l'activation des éléments de positionnement.

14. Véhicule selon la revendication 13, **caractérisé en ce que** le mécanisme de verrouillage (30) est configuré de sorte que le passage du mécanisme de verrouillage de la configuration de déverrouillage à la configuration de verrouillage provoque un coulissement du capot (29) par rapport au support multifonctions (10) dans le premier sens.

## Patentansprüche

1. Multifunktionsträger (10), welcher zur Montage von funktionellen Elementen eines Kraftfahrzeugs an einer Karosserie des Fahrzeugs vorgesehen ist, wobei der Multifunktionsträger (10) Folgendes aufweist:
- Befestigungselemente (14), welche dafür vorgesehen sind, den Multifunktionsträger (10) an mindestens einem mit der Karosserie verknüpften Element, wie beispielsweise einem Kotflügelträger (12) und / oder einer Frontholmverkleidung (11), zu befestigen.
- Montageelemente, welche dafür vorgesehen sind, mindestens einen Scheinwerfer (18), welcher dafür vorgesehen ist, eine Beleuchtungsfunktion zu gewährleisten, und /oder eine Motorhaube (29), welche dafür vorgesehen ist, einen Motorraum des Fahrzeugs in einer geschlossenen Position der Motorhaube (29) zu verschließen, an dem Multifunktionsträger (10) zu halten,
wobei der Träger (10) Montageelemente aufweist, welche dafür vorgesehen sind, an dem Multifunktionsträger (10) einen Wasserkasten (19, 20) komplett oder zum Teil zu halten, welcher dafür vorgesehen ist, Wasser zu sammeln und / oder es von der Luft zu trennen, bevor sie einem Ventilationskreislauf des Fahrzeugs zugeführt wird, wobei der Träger (10) Elemente zur Montage der Motorhaube (29) an dem Multifunktionsträger (10) aufweist,
wobei die Elemente zur Montage der Motorhaube (29) an dem Multifunktionsträger (10) Positionierungselemente aufweisen, welche derartig ausgelegt sind, dass jede Verlagerung mit einer vertikalen Komponente zwischen dem Multifunktionsträger (10) und der Motorhaube (29), wenn sie sich in geschlossener Position befindet, unterbunden ist,
**dadurch gekennzeichnet, dass** die Positionierungselemente derartig ausgelegt sind, dass sie durch eine Verschiebung der Motorhaube (29) in Bezug auf den Multifunktionsträger (10) in einer ersten Richtung aktiviert werden, und dass sie eine Verschiebung der Motorhaube (29) in Bezug auf den Multifunktionsträger (10) in einer der ersten Richtung entgegengesetzten zweiten Richtung, insbesondere in einer im Wesentlichen horizontalen Richtung (X), deaktiviert werden.

2. Multifunktionsträger (10) nach Anspruch 1, **dadurch gekennzeichnet, dass** die Positionierungselemente ein unteres Anschlagelement (34) aufweisen, welches dafür vorgesehen ist, die Motorhaube (29) nach unten zu blockieren, wenn sie sich in geschlossener Position befindet.

3. Multifunktionsträger (10) nach Anspruch 1 oder 2, **dadurch gekennzeichnet, dass** die Positionierungselemente mindestens ein erstes Organ aufweisen, welches dafür vorgesehen ist, bei der Verschiebung der Motorhaube (29) in Bezug auf den Multifunktionsträger (10) in der ersten Richtung durch Verschiebung mit einem fest mit der Motorhaube (29) verbundenen Organ in Eingriff zu gelangen.

4. Multifunktionsträger (10) nach einem der Ansprüche 1 bis 3, **dadurch gekennzeichnet, dass** eines des ersten und zweiten Organs mindestens eine Koppelklaue (27) aufweist, welche sich bei der Verschiebung der Motorhaube (29) in die erste Richtung in eine Rückhalteaufnahme (28) einfügen, welche das andere des ersten und zweiten Organs bestückt.

5. Multifunktionsträger (10) nach einem der Ansprüche 1 bis 4, **dadurch gekennzeichnet, dass** er Montageelemente aufweist, welche zum Festhalten eines Teils des Wasserkastens vorgesehen sind, und dass die Montageelemente, welche zum Festhalten eines Teils des Wasserkastens vorgesehen sind, ein Endelement (19) zum Verschließen des Wasserkastens aufweisen, wobei das Endelement (19) fest mit dem Multifunktionsträger (10) verbunden und derartig ausgelegt ist, dass es ein longitudinales Ende eines zentralen Elements (20) zum Verschließen des Wasserkastens stützen kann.

6. Multifunktionsträger (10) nach Anspruch 5, **dadurch gekennzeichnet, dass** das zentrale Element (20) dafür vorgesehen ist, Wasser zu sammeln und es bis zum Endelement (19) zu führen, das Endelement (19) ein Element zum Leiten (21) des Wassers aufweist, welches dafür ausgelegt ist, das von dem zentralen Element (20) zugeführte Wasser aufzunehmen und es vom Multifunktionsträger (10) weg zu leiten.

7. Multifunktionsträger (10) nach Anspruch 5 oder 6, **dadurch gekennzeichnet, dass** das Endelement (19) eine obere Fläche (23) aufweist, auf welcher das entsprechende longitudinale Ende des zentralen Elements (20) vorgesehen ist, sich durch Überlappung von oben abzustützen.

8. Multifunktionsträger (10) nach einem der Ansprüche 5 bis 7, **dadurch gekennzeichnet, dass** das Endelement (19) ein Element zur Abdichtung (25) gegenüber Wasser aufweist, welches dafür vorgesehen ist, zwischen dem Endelement (19) und dem zentralen Element (20) eingefügt zu sein.

9. Multifunktionsträger (10) nach einem der Ansprüche 5 bis 8, **dadurch gekennzeichnet, dass** das Endelement (19) ein Stützelement (26) aufweist, welches dafür vorgesehen ist, sich in abdichtender Weise auf einem oberen Querträger der Wand der Karosserie abzustützen.

10. Multifunktionsträger (10) nach einem der Ansprüche 1 bis 9, **dadurch gekennzeichnet, dass** er aus einem Monoblock-Teil gebildet ist.

11. Kraftfahrzeug, aufweisend mindestens einen Multifunktionsträger (10) nach einem der Ansprüche 1 bis 10, ein mit der Karosserie verknüpftes Element, wie beispielsweise ein Kotflügelträger (12) und / oder eine Frontholmverkleidung (11), an welchem der mindestens eine Multifunktionsträger (10) befestigt ist, und mindestens ein funktionelles Element, welches an dem Multifunktionsträger gehalten ist, welches aus den Folgenden ausgewählt ist:
- ein kompletter oder ein Teil eines Wasserkastens (19, 20), welcher dafür vorgesehen ist, Wasser zu sammeln und / oder es von der Luft zu trennen, bevor sie einem Ventilationskreislauf des Fahrzeugs zugeführt wird,
- mindestens ein Scheinwerfer (18), welcher dafür vorgesehen ist, eine Beleuchtungsfunktion zu gewährleisten,
- eine Motorhaube (29), welche dafür vorgesehen ist, einen Motorraum des Fahrzeugs in einer geschlossenen Position der Motorhaube zu verschließen.

12. Fahrzeug nach Anspruch 11, **dadurch gekennzeichnet, dass** es zwei Multifunktionsträger (10) aufweist, welche beiderseits der Motorhaube (29) und / oder des zentralen Elements (20) zum Verschließen des Wasserkastens gemäß einer Querrichtung (Y) des Fahrzeugs angeordnet sind.

13. Fahrzeug nach Anspruch 11 oder 12, **dadurch gekennzeichnet, dass** es einen Verriegelungsmechanismus (30) aufweist, welcher zwischen einer Verriegelungskonfiguration, welche die Deaktivierung der Positionierungselemente unterbindet, und einer Entriegelungskonfiguration, welche die Aktivierung der Positionierungselemente ermöglicht, variiert.

14. Fahrzeug nach Anspruch 13, **dadurch gekennzeichnet, dass** der Verriegelungsmechanismus (30) derartig ausgelegt ist, dass der Übergang des Verriegelungsmechanismus von der Entriegelungskonfiguration in die Verriegelungskonfiguration eine Verschiebung der Motorhaube (29) in Bezug auf den Multifunktionsträger (10) in der ersten Richtung bewirkt.

## Claims

1. Multifunctional support (10) intended for mounting functional elements of a motor vehicle on a body of the vehicle, the multifunctional support (10) including:
- fixing elements (14) intended for fixing the multifunctional support (10) to at least one associated element of the body, such as a fender support (12) and/or an A pillar liner (11),
- mounting elements intended to retain on the multifunctional support (10) at least one headlamp (18) intended to provide a lighting function and/or a hood (29) intended to close an engine compartment of the vehicle in a closed position of the hood (29),
the support (10) including mounting elements intended to retain on the multifunctional support (10) part or all of a water box (19, 20) intended to collect water and/or to separate it from air to be routed into a ventilation circuit of the vehicle,
the support (10), including elements for mounting the hood (29) on the multifunctional support (10), the elements for mounting the hood (29) on the multifunctional support (10) including positioning elements configured so as to prevent all movement having a vertical component between the multifunctional support (10) and the hood (29) when it is in the closed position,
**characterized in that** the positioning elements are configured so as to be activated by sliding of the hood (29) relative to the multifunctional support (10) in a first direction and to be deactivated by sliding of the hood (29) relative to the multifunctional support (10) in a second direction opposite the first direction, notably in a substantially horizontal direction X.

2. Multifunctional support (10) according to Claim 1, **characterized in that** the positioning elements include a lower abutment element (34) intended to immobilize the hood (29) in the downward direction when it is in the closed position.

3. Multifunctional support (10) according to Claim 1 or 2, **characterized in that** the positioning elements include at least one first member intended to be engaged by sliding in a second member fastened to the hood (29) on sliding of the hood (29) relative to the multifunctional support (10) in the first direction.

4. Multifunctional support (10) according to one of Claims 1 to 3, **characterized in that** either the first or second member includes at least one fixing lug (27) which, on sliding of the hood (29) in the first direction, is inserted in a retaining housing (28) equipping either the first or second member, respectively.

5. Multifunctional support (10) according to one of Claims 1 to 4, **characterized in that** it includes mounting elements intended to retain part of the water box and **in that** these mounting elements intended to retain part of the water box include an end closure element (19) of the water box, said end element (19) being fastened to the multifunctional support (10) and configured so as to be able to support one longitudinal end of a central closure element (20) of the water box.

6. Multifunctional support (10) according to Claim 5, **characterized in that** the central element (20) being intended to collect water and to route it to the end element (19), the end element (19) includes a water guiding element (21) configured to collect water routed by the central element (20) and to channel it off the multifunctional support (10).

7. Multifunctional support (10) according to Claim 5 or 6, **characterized in that** the end element (19) includes an upper face (23) on which the corresponding longitudinal end of the central element (20) is intended to come to bear by overlapping it from above.

8. Multifunctional support (10) according to one of Claims 5 to 7, **characterized in that** the end element (19) includes a waterproofing element (25) intended to be disposed between the end element (19) and the central element (20).

9. Multifunctional support (10) according to one of Claims 5 to 8, **characterized in that** the end element (19) includes a bearing element (26) intended to come to bear in watertight manner on a firewall upper crossmember of the body.

10. Multifunctional support (10) according to any one of Claims 1 to 9, **characterized in that** it is a one-piece part.

11. Motor vehicle including at least one multifunctional support (10) according to any one of Claims 1 to 10, an associated element of the body of the vehicle, such as a fender support (12) and/or an A pillar liner (11), to which said at least one multifunctional support (10) is fixed, and at least one functional element retained on the multifunctional support, chosen from the following:
- all or part of a water box (19, 20) intended to collect water and/or to separate it from air to be routed into a ventilation circuit of the vehicle,
- at least one headlamp (18) intended to provide a lighting function,
- a hood (29) intended to close an engine compartment of the vehicle in a closed position of the hood.

12. Vehicle according to Claim 11, **characterized in that** it includes two multifunctional supports (10) disposed on respective opposite sides of the hood (29) and/or the central closure element (20) of the water box along a direction Y transverse to the vehicle.

13. Vehicle according to Claim 11 or 12, **characterized in that** it includes a locking mechanism (30) varying between a locking configuration preventing deactivation of the positioning elements and an unlocking configuration allowing activation of the positioning elements.

14. The vehicle according to Claim 13, **characterized in that** the locking mechanism (30) is configured so that the passage of the locking mechanism from the unlocking configuration to the locking configuration causes sliding of the hood (29) relative to the multifunctional support (10) in the first direction.
